# EUROPEAN PATENT APPLICATION

(11) **EP 4 075 553 A1**
(43) Date of publication of application: **19.10.2022**
(21) Application number: 20899833.6
(22) Date of filing: 09.12.2020
(51) Int. Cl.: H01M 8/02, H01M 8/0247, H01M 8/12

(54) **FUEL CELL SYSTEM**

(30) Priority: 12.12.2019 JP 2019224871
(71) Applicant: Kabushiki Kaisha F.C.C., Hamamatsu-shi, Shizuoka 431-1394 (JP)
(72) Inventor: INO, Kentaro, Hamamatsu-shi, Shizuoka 431-1304 (JP); OHASHI, Kenji, Hamamatsu-shi, Shizuoka 431-1304 (JP); JEONG, Kwangjin, Hamamatsu-shi, Shizuoka 431-1304 (JP); SUZUKI, Satoshi, Hamamatsu-shi, Shizuoka 431-1304 (JP); HINO, Ryota, Hamamatsu-shi, Shizuoka 431-1304 (JP)
(74) Representative: Cohausz & Florack
(86) International application number: PCT/JP2020/045859
(87) International publication number: WO 2021/117766

(57) **Abstract**

A fuel cell system that can uniformly supply fuel gas to a water vapor retention member and that can inhibit soot from being generated is provided. A fuel cell system includes a cell 1 that is capable of generating power and that includes a fuel electrode 1a, an air electrode 1b, and an electrolyte 1c, a water vapor retention member 11 that is disposed on a communication path for the fuel gas supplied to the fuel electrode 1a, that is capable of retaining water vapor generated by the fuel electrode 1a along with power generation by using the cell 1 and mixing the water vapor with the fuel gas, that includes a reforming catalyst enabling the hydrogen to be generated by reacting the fuel gas, and that is capable of supplying the hydrogen generated due to a catalytic reaction by using the reforming catalyst to the fuel electrode 1a, and exhaust ports 13a via which the fuel gas is to be exhausted toward positions on a surface of the water vapor retention member 11.

## Description

### Technical Field

The present invention relates to a fuel cell system including a cell that is capable of generating power and that includes a fuel electrode to which hydrogen acquired by reforming fuel gas is supplied, an air electrode to which oxygen in the air is supplied, and an electrolyte that is interposed between the fuel electrode and the air electrode and that enables oxygen ions generated by the air electrode to pass to the fuel electrode.

### Background Art

A known fuel cell system that uses hydrogen and hydrocarbon as a fuel and that is capable of generating power by causing electrochemical reaction between the fuel and oxygen has high energy conversion efficiency. In recent years, fuel cell systems in various forms have been proposed. In the case where hydrocarbon is used as the fuel, however, a reforming reaction for generating hydrogen from the hydrocarbon is needed, and the hydrogen is generated by water vapor reforming for causing a reaction between the hydrocarbon and water. A water vapor reforming reaction is an endothermic reaction and accordingly needs a temperature of 600°C or more, and it is necessary to continuously supply heat at 600°C or more. In addition, it is necessary to generate and supply water vapor, for example, by heating water. In particular, a fuel cell called a solid oxide fuel cell (SOFC) operates at a temperature of 600°C or more, and a temperature caused by power generation is close to the temperature of the reforming reaction for generating the hydrogen from the hydrocarbon that is the fuel. Accordingly, the hydrogen can be generated (the reforming reaction) from the hydrocarbon by using waste heat in the fuel cell, and power generation efficiency is high.

The present applicant pays attention to generation of water vapor from a fuel electrode along with power generation by using a fuel cell and proposes that the water vapor is retained and directly used for reforming (see PTL 1). Such an existing fuel cell system includes a water vapor retention member that is capable of retaining water vapor and that includes a reforming catalyst that is capable of generating hydrogen by causing fuel gas to react. The water vapor retention member retains the water vapor generated by the fuel electrode along with power generation by using the cell, mixes the water vapor with the fuel gas, and is capable of supplying the hydrogen that is generated by the reforming catalyst to the fuel electrode.

### Citation List

### Patent Literature

PTL 1: Japanese Patent No. 6524309

### Summary of Invention

### Technical Problem

As for the existing technique described above, however, a fuel gas inlet is formed at an end of a groove shape that is formed on a fuel electrode separator or a fuel electrode holder, a fuel gas outlet is formed at the other end thereof, and fuel gas that is introduced from the inlet passes along the groove shape and is supplied to the water vapor retention member. Consequently, the fuel gas is concentrated from a position upstream of the groove shape and is supplied to the water vapor retention member, and there is a possibility that soot is generated and that the cell is damaged depending on operation conditions.

In particular, as for the existing technique described above, the water vapor that is generated from the fuel electrode is retained and used for the reforming reaction by using the reforming catalyst, and consequently, pyrolysis reaction that is a cause for which the soot is generated is more likely to be excessive than the case where excess water vapor is supplied from the outside and used for reforming, which leads to a decrease in the lifetime of the cell.

The present invention has been accomplished in view of such circumstances, and it is an object of the present invention to provide a fuel cell system that can uniformly supply fuel gas to a water vapor retention member and can inhibit soot from being generated.

### Solution to Problem

The invention recited in Claim 1 is a fuel cell system including a cell that is capable of generating power and that includes a fuel electrode to which hydrogen acquired by reforming fuel gas is supplied, an air electrode to which oxygen in air is supplied, and an electrolyte that is interposed between the fuel electrode and the air electrode and that enables an oxygen ion generated from the oxygen in the air supplied to the air electrode to pass to the fuel electrode, a water vapor retention member that is disposed on a communication path for the fuel gas supplied to the fuel electrode, that is capable of retaining water vapor generated by the fuel electrode along with power generation by using the cell and mixing the water vapor with the fuel gas, that includes a reforming catalyst enabling the hydrogen to be generated by reacting the fuel gas, and that is capable of supplying the hydrogen generated due to a catalytic reaction by using the reforming catalyst to the fuel electrode, and a plurality of exhaust ports via which the fuel gas is to be exhausted toward positions on a surface of the water vapor retention member.

The invention recited in Claim 2 is the fuel cell system recited in Claim 1 further including a fuel electrode separator or a fuel electrode holder that enables the fuel gas to pass, and a shield that is mounted on the fuel electrode separator or the fuel electrode holder. The plurality of exhaust ports includes a plurality of through-holes that is formed in the shield.

The invention recited in Claim 3 is the fuel cell system recited in Claim 2 in which a container space is formed between the fuel electrode separator or the fuel electrode holder and the shield, the fuel gas to be supplied being containable in the container space and being to be exhausted therefrom via the plurality of exhaust ports.

The invention recited in Claim 4 is the fuel cell system recited in Claim 3 in which the fuel electrode separator or the fuel electrode holder has a recessed shape at a predetermined portion and is mounted with the recessed shape covered by the shield such that the container space is formed.

The invention recited in Claim 5 is the fuel cell system recited in Claim 4 in which an introduction flow path through which the fuel gas is introduced into the container space and a discharge flow path through which the fuel gas is discharged from the container space include a notch that is formed in the fuel electrode separator or the fuel electrode holder.

The invention recited in Claim 6 is the fuel cell system recited in any one of Claim 2 to Claim 5 in which a supply space is formed between the shield and the water vapor retention member, the fuel gas that is exhausted via the plurality of exhaust ports being containable in the supply space.

### Advantageous Effects of Invention

As for the invention in Claim 1 includes the exhaust ports via which the fuel gas is to be exhausted toward the positions on the surface of the water vapor retention member. Accordingly, the fuel gas can be uniformly supplied to the water vapor retention member, and generation of soot can be suppressed.

As for the invention in Claim 2 includes the fuel electrode separator or the fuel electrode holder that enables the fuel gas to pass and the shield that is mounted on the fuel electrode separator or the fuel electrode holder, and the exhaust ports include the through-holes that are formed in the shield. Accordingly, the exhaust ports can be accurately and readily formed at predetermined positions.

As for the invention in Claim 3, the container space is formed between the fuel electrode separator or the fuel electrode holder and the shield, and the fuel gas to be supplied is containable in the container space and is to be exhausted therefrom via the exhaust ports. Accordingly, the container space functions as a chamber, and the amount of the fuel gas that is exhausted via the exhaust ports can be substantially constant.

As for the invention in Claim 4, the fuel electrode separator or the fuel electrode holder has the recessed shape at the predetermined portion and is mounted with the recessed shape covered by the shield such that the container space is formed. Accordingly, the volume and the position of the container space can be readily set depending on the form of the fuel cell system.

As for the invention in Claim 5, the introduction flow path through which the fuel gas is introduced into the container space and the discharge flow path through which the fuel gas is discharged from the container space include the notch that is formed in the fuel electrode separator or the fuel electrode holder. Accordingly, the flow rate of the fuel gas that is introduced into the container space and the flow rate of the fuel gas that is discharged from the container space can be freely adjusted by setting the size, position, or number of the notch and forming the notch.

As for the invention in Claim 6, the supply space is formed between the shield and the water vapor retention member, and the fuel gas that is exhausted via the exhaust ports is containable in the supply space. Accordingly, the fuel gas can be uniformly supplied over the surface of the water vapor retention member.

### Brief Description of Drawings

[Fig. 1] Fig. 1 illustrates a plan view and a front view of a fuel cell system according to a first embodiment of the present invention.
[Fig. 2] Fig. 2 schematically illustrates a section in Fig. 1 taken along line II-II.
[Fig. 3] Fig. 3 schematically illustrates a sectional view of a cell in the fuel cell system.
[Fig. 4] Fig. 4 illustrates an exploded perspective view of the fuel cell system.
[Fig. 5] Fig. 5 illustrates a perspective view of a fuel electrode separator (before a shield is mounted) in the fuel cell system.
[Fig. 6] Fig. 6 illustrates three views of the shield in the fuel cell system.
[Fig. 7] Fig. 7 illustrates a plan view of the fuel electrode separator (after the shield is mounted) in the fuel cell system.
[Fig. 8] Fig. 8 schematically illustrates a section in Fig. 7 taken along line VIII-VIII.
[Fig. 9] Fig. 9 illustrates a plan view of an air electrode separator in the fuel cell system.
[Fig. 10] Fig. 10 illustrates a plan view and a front view of a fuel cell system according to a second embodiment of the present invention.
[Fig. 11] Fig. 11 schematically illustrates a section of the fuel cell system taken along line XI-XI.
[Fig. 12] Fig. 12 illustrates an exploded perspective view of the fuel cell system.
[Fig. 13] Fig. 13 illustrates three views of a shield in the fuel cell system.
[Fig. 14] Fig. 14 illustrates a perspective view of a fuel electrode holder (before the shield is mounted) in the fuel cell system.
[Fig. 15] Fig. 15 illustrates a plan view of the fuel electrode holder (after the shield is mounted) in the fuel cell system.
[Fig. 16] Fig. 16 schematically illustrates a section in Fig. 15 taken along line XVI-XVI.
[Fig. 17] Fig. 17 illustrates a plan view of an air electrode holder in the fuel cell system.
[Fig. 18] Fig. 18 is a graph of the result of an experiment illustrating technical superiority according to the present embodiment.

### Description of Embodiments

Embodiments of the present invention will hereinafter be described in detail with reference to the drawings.

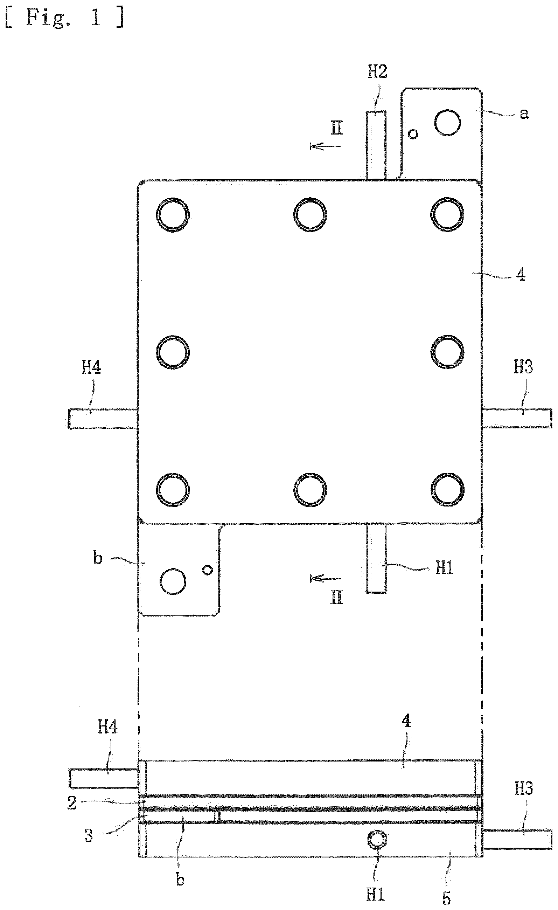

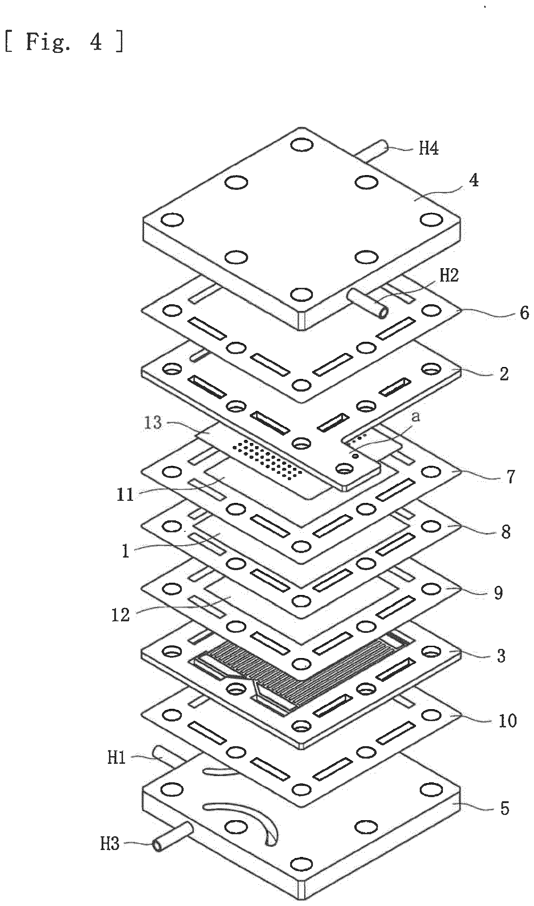

As illustrated in Fig. 1 to Fig. 9, a fuel cell system according to a first embodiment includes a cell 1 that is capable of generating power and that includes a fuel electrode 1a to which hydrogen that is acquired by reforming fuel gas is supplied, an air electrode 1b to which oxygen in the air is supplied, and an electrolyte 1c that is interposed between the fuel electrode 1a and the air electrode 1b and that enables oxygen ions generated by the air electrode 1b to pass to the fuel electrode 1a, a fuel electrode separator 2 (a fuel electrode terminal), an air electrode separator 3 (an air electrode terminal), an exhaust manifold 4, a supply manifold 5, sealing materials (6 to 10), a water vapor retention member 11, a current collector 12, and a shield 13. The present embodiment is used for a fuel cell system that includes a single cell that has a flat plate structure.

The cell 1 is called a solid oxide fuel cell (SOFC) and is used with the cell 1 incorporated into the fuel cell system. The cell 1 has a multilayer structure in which the electrolyte 1c that is solid is sandwiched between the fuel electrode 1a (an anode) and the air electrode 1b (a cathode), and the entire cell 1 is solid. As for a high-temperature fuel cell system such as the solid oxide fuel cell that includes the cell 1, a temperature caused by power generation of the cell is close to the temperature of a reforming reaction. Accordingly, hydrogen can be generated (the reforming reaction) from hydrocarbon by using waste heat in the fuel cell, and power generation efficiency is high.

The electrolyte 1c of the cell 1 is composed of an oxygen ion conductive material such as ceramics (ZrO₂, CeO₂, and Ga oxides), the fuel electrode 1a is formed so as to be in contact with a surface thereof, and the air electrode 1b is formed so as to be in contact with the other surface. An example of the fuel electrode 1a (the anode) is an electrode that contains the material of the electrolyte 1c and that is acquired by firing a mixture of a catalyst (such as NiO) and an agent for forming a hole, hydrogen that is acquired by reforming the fuel gas is supplied to the electrode, and the electrode is electrically connected to the fuel electrode separator 2 with the water vapor retention member 11 and the shield 13 interposed therebetween. An example of the air electrode 1b (the cathode) of the cell 1 is an electrode that contains a metal oxide of, for example, lanthanum, strontium, or cobalt, oxygen in the air is supplied to the electrode, and the electrode is electrically connected to the air electrode separator 3 with the current collector 12 interposed therebetween.

At the air electrode 1b, the oxygen ions are generated from the supplied oxygen in the air and electrons, and the generated oxygen ions pass through the electrolyte 1c and move toward the fuel electrode 1a. At the fuel electrode 1a, the hydrogen that is acquired by reforming the fuel gas reacts with the oxygen ions that pass through the electrolyte 1c, and water (H₂O) is generated. Generated electrons pass through a load, not illustrated, and flow into the air electrode 1b, and consequently, power can be generated.

The reaction temperature of the solid oxide fuel cell is a high temperature of 600°C or more, and the generated water (H₂O) is entirely generated as water vapor. The fuel gas includes hydrocarbon gas such as town gas or LP gas (methane, ethane, propane, or butane) and enables hydrogen to be generated due to a catalytic reaction by using a reforming catalyst that is carried by the water vapor retention member 11. Accordingly, at the fuel electrode 1a, carbon monoxide (CO) and carbon dioxide (CO₂) are generated in addition to the water (H₂O). The fuel gas to be supplied may be gas composed of alcohols or ethers instead of the hydrocarbon gas.

The manifolds (4 and 5) are used to supply the fuel gas and the air to the fuel cell system and to discharge the fuel gas and the air from the fuel cell system and have pipes (H1 to H4) for supplying and discharging the fuel gas and the air. The fuel electrode separator 2, the air electrode separator 3, the sealing materials (6 to 10), the water vapor retention member 11, the current collector 12, and the shield 13, which are components of the fuel cell system according to the present embodiment, are stacked between the manifolds (4 and 5).

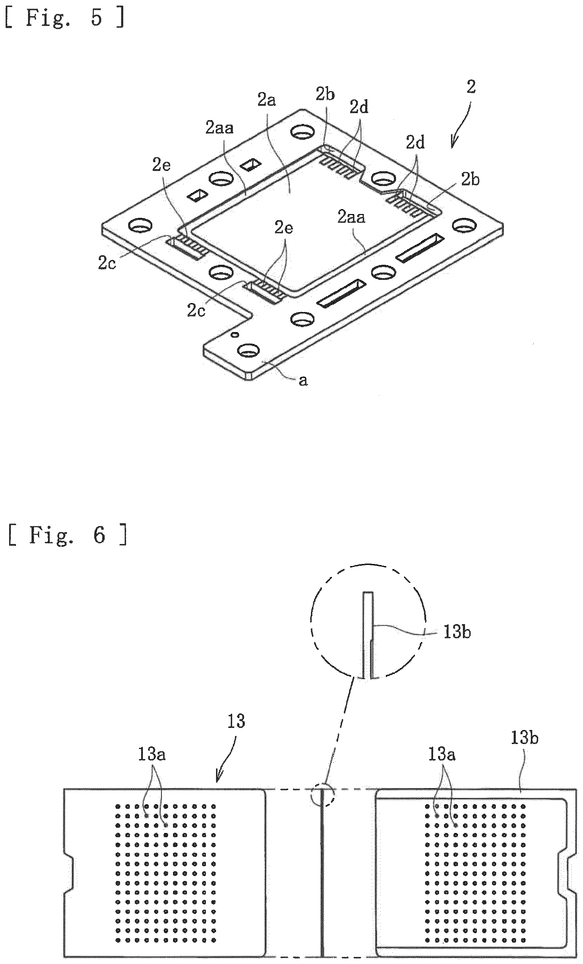

The fuel electrode separator 2 is composed of a conductive metal plate that is heat resistant where a terminal portion a that is connectable to a wire (not illustrated) is integrally formed and is electrically connected to the fuel electrode 1a. As illustrated in Fig. 5, the fuel electrode separator 2 according to the present embodiment is composed of a rectangular metal plate that has a recessed shape 2a, fuel inlets 2b, fuel outlets 2c, fuel introduction flow paths 2d, and fuel discharge flow paths 2e.

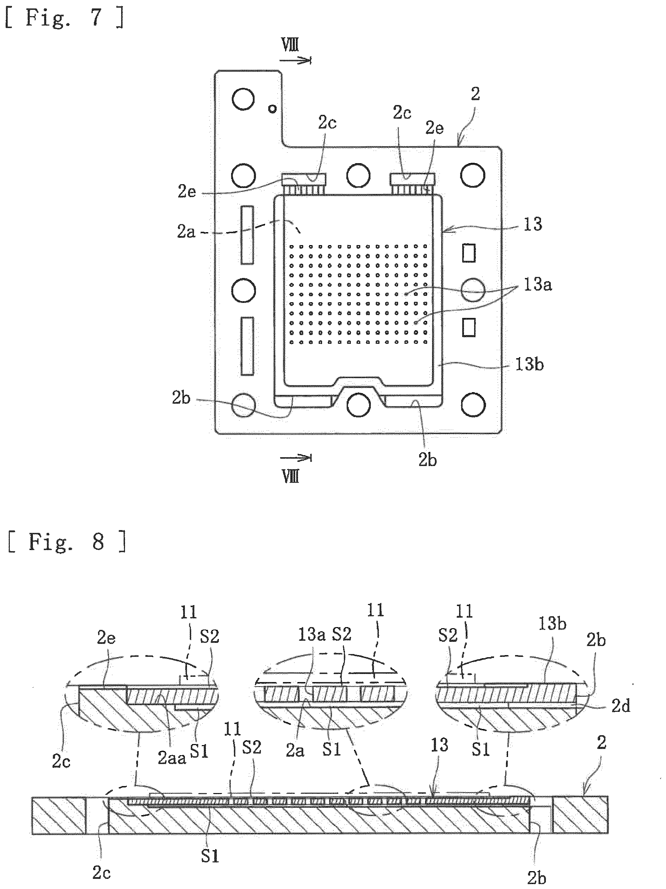

The recessed shape 2a is located at a predetermined portion (a substantially central position) on the fuel electrode separator 2 and is a recessed shape with a bottom that has a predetermined depth. A step portion 2aa is formed along a peripheral portion of the recessed shape 2a, and the shield 13 can be mounted on the step portion 2aa. As illustrated in Fig. 7 and Fig. 8, the recessed shape 2a is covered by the shield 13, and a container space S1 is formed with the shield 13 mounted on the step portion 2aa. A method of forming the recessed shape 2a may be a cutting process, a bending process, or another process.

The fuel inlets 2b include opening portions for introducing and guiding the supplied fuel gas to the container space S1 via the introduction flow paths 2d. The fuel outlets 2c include opening portions for discharging the fuel gas that is introduced into the container space S1 via the discharge flow paths 2e. The introduction flow paths 2d through which the fuel gas is introduced into the container space S1 and the discharge flow paths 2e through which the fuel gas is discharged from the container space S1 include notches that are formed in the fuel electrode separator 2. The introduction flow paths 2d are formed so as to be in communication with the fuel inlets 2b and the recessed shape 2a. The discharge flow paths 2e are formed so as to be in communication with the fuel outlets 2c and the recessed shape 2a.

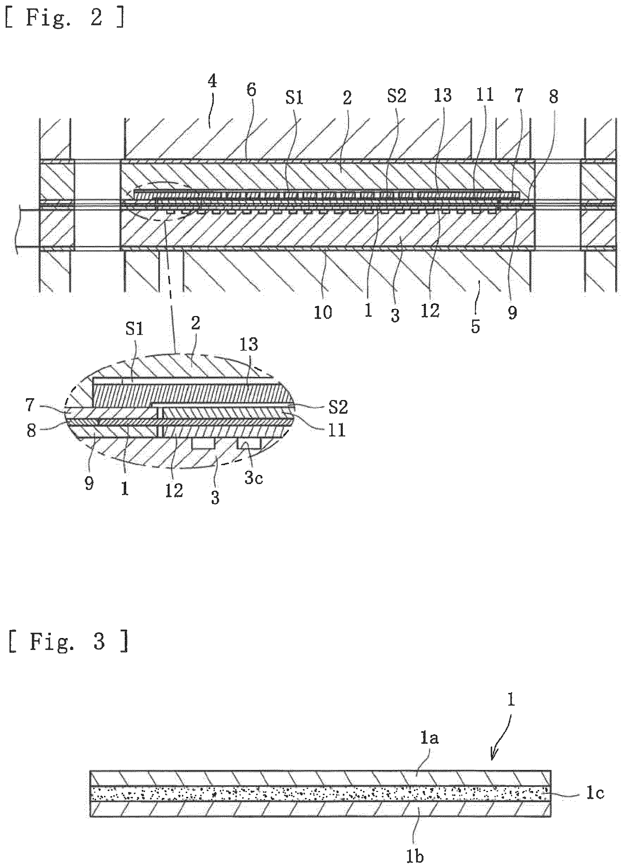

The shield 13 is composed of a conductive metal plate material that covers the recessed shape 2a of the fuel electrode separator 2 and includes exhaust ports 13a that include through-holes and a step portion 13b that is formed along a peripheral portion as illustrated in Fig. 6. As illustrated in Fig. 2 and Fig. 8, the container space S1 is formed between the shield 13 and the recessed shape 2a with the shield 13 mounted on the fuel electrode separator 2 as illustrated in Fig. 7, and the fuel gas in the container space S1 can be exhausted toward positions on a surface of the water vapor retention member 11 by using the exhaust ports 13a.

That is, the container space S1 is formed between the fuel electrode separator 2 and the shield 13, and the fuel gas to be supplied is containable in the container space S1 and is to be exhausted therefrom via the exhaust ports 13a. The fuel gas that is introduced from the fuel inlets 2b passes through the introduction flow paths 2d, reaches the container space S1, is contained there, and is exhausted via the exhaust ports 13a while the pressure thereof is increased. Consequently, the fuel gas can be exhausted toward the surface (the front surface) of the water vapor retention member 11 in a wide region and at a constant flow rate.

The step portion 13b is formed along the peripheral portion of the shield 13, and the water vapor retention member 11 is stacked on the step portion 13b. As a result, as illustrated in Fig. 2 and Fig. 8, a supply space S2 is formed between the shield 13 and the water vapor retention member 11, and the fuel gas that is exhausted via the exhaust ports 13a is containable in the supply space S2. The container space S1 and the supply space S2 are thus formed on the front surface and the back surface of the shield 13 according to the present embodiment and function as chambers or buffers. The shield 13 may not include the step portion 13b. In this case, the supply space S2 is not formed. A method of forming the step portion 13b may be a cutting process, a bending process, or another process.

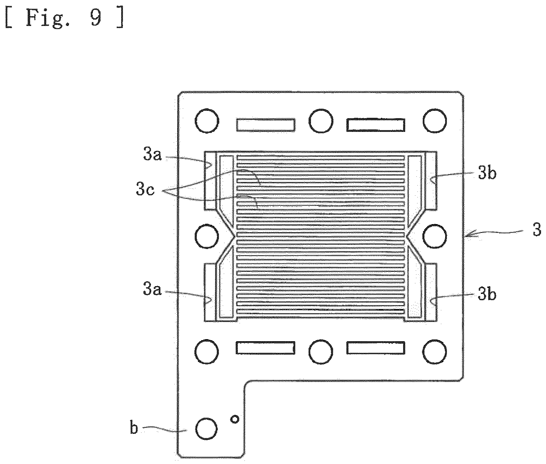

The air electrode separator 3 is composed of a conductive metal plate that is heat resistant, has air flow paths 3c through which the air passes on an inner side (inside the single cell) as illustrated in Fig. 9, and is electrically connected to the air electrode 1b. The air flow paths 3c have groove shapes (that may be a single groove shape) that are formed in the air electrode separator 3, and the paths through which the air can pass are formed with the air electrode separator 3 and the current collector 12 stacked. As for the air electrode separator 3, a terminal portion b that is connectable to a wire (not illustrated) is integrally formed.

The current collector 12 includes a conductive member that is interposed between the air electrode 1b of the cell 1 and the air electrode separator 3, is used to maintain good electrical connection between the air electrode 1b and the air electrode separator 3, and is composed of, for example, metal mesh, metal sponge, or porous metal. The water vapor retention member 11 according to the present embodiment is enclosed by a member (for example, a conductive mesh member composed of stainless steel) as in the current collector 12 and maintains good electrical connection between the fuel electrode 1a and the fuel electrode separator 2.

The water vapor retention member 11 is disposed on a communication path (between the fuel electrode separator 2 and the fuel electrode 1a of the cell 1 and between the shield 13 and the fuel electrode 1a of the cell 1 according to the present embodiment) for the fuel gas that is supplied to the fuel electrode 1a and is capable of retaining water vapor that is generated by the fuel electrode 1a along with power generation by using the cell 1 and mixing the water vapor with the fuel gas that is supplied through the fuel flow path (a recessed shape 2a). The water vapor retention member 11 according to the present embodiment includes the reforming catalyst that enables the hydrogen to be generated by reacting the fuel gas and is capable of supplying the hydrogen that is generated due to a catalytic reaction by using the reforming catalyst to the fuel electrode 1a.

More specifically, the water vapor retention member 11 according to the present embodiment includes a sheet member that is permeable and flexible, includes a paper member that contains inorganic fibers or organic fibers, and carries the reforming catalyst that enables the hydrogen to be generated by reacting the fuel gas. For example, ceramic fibers, organic fibers such as pulp, and inorganic fibers are mixed with a predetermined amount of water, and subsequently, a composite oxide of magnesium and aluminum that serves as a carrier is introduced. Subsequently, cationic polymer, alumina sol, and polymeric flocculant are introduced for papermaking, and the sheet member that is permeable and flexible is acquired by pressing and drying. The acquired sheet member is fired at 600 to 850°C for 1 to 24 hours, is immersed in an aqueous solution that contains metal ions serving as a catalyst for 0.1 to 4 hours, is dried, is fired at 600 to 800°C at 1 to 24 hours, and the water vapor retention member 11 is consequently acquired. The aqueous solution that contains the metal ions serving as the catalyst can be manufactured by selecting one or more kinds from Ni nitrate, Ni sulphate, Ni chloride, Ru nitrate, Ru sulphate, Ru chloride, Rh nitrate, Rh sulphate, and Rh chloride. The temperature at which the sheet member is fired is preferably 700°C to 800°C, and the time for which the sheet member is fired preferably ranges from 2 to 10 hours.

The water vapor retention member 11 that is thus acquired includes the paper member that carries catalyst metal (that is, the reforming catalyst that enables the hydrogen to be generated by reacting the fuel gas) such as Ni, Ru, or Rh with the composite oxide of magnesium and aluminum used as the carrier. For example, thickness thereof is preferably about 0.1 to 1.0 (mm), the porosity thereof is preferably about 70 to 90 (%), and the amount of the catalyst metal is preferably about 2 to 9.5 (mg / cm²). When the porosity is less than 70%, the fuel gas is unlikely to diffuse, and a pressure loss is increases, which is not preferable. When the porosity is more than 90%, contact between the catalyst and the fuel gas is reduced, and the performance of the catalyst is reduced, which is not preferable. When the amount of the catalyst metal is less than 2 mg / cm², sufficient performance of the catalyst is not acquired. When the amount of the catalyst metal is more than 9.5 mg / cm², catalyst particles sinter, the particle diameter increases, and the performance of the catalyst that matches the amount of the introduced catalyst metal is not acquired, which is not preferable. The thinner the thickness of paper, the smaller the volume of the fuel cell system itself. However, when the thickness of paper is equal to or less than 0.1 mm, the porosity and the amount of the catalyst metal are non-uniform, which is not preferable. When the thickness of paper is more than 1.0 mm, a volume that is occupied by the paper increases, and the volume of the fuel cell system itself increases, which is not preferable.

The water vapor retention member 11 is preferably conductive and electrically connects the fuel electrode separator 2 and the fuel electrode 1a to each other, and the water vapor retention member 11 is enclosed by the current collector according to the present embodiment but may be in the form of mesh to improve electrical connection and permeability. The water vapor retention member 11 is thus enclosed by the current collector composed of a conductive material or is composed of a conductive material that electrically connects the fuel electrode separator 2 and the fuel electrode 1a to each other. This enables electrical connection between the fuel electrode separator 2 and the fuel electrode 1a to be established via the water vapor retention member 11 with certainty.

A fuel cell system according to a second embodiment of the present invention will now be described.

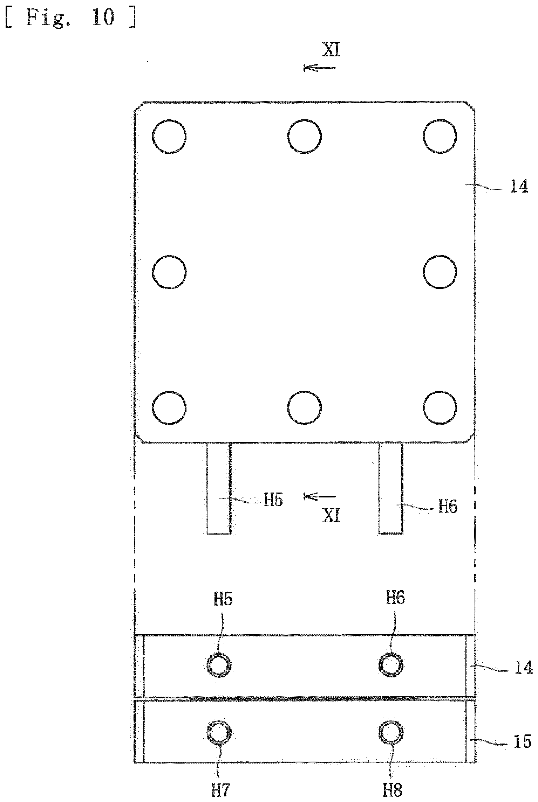

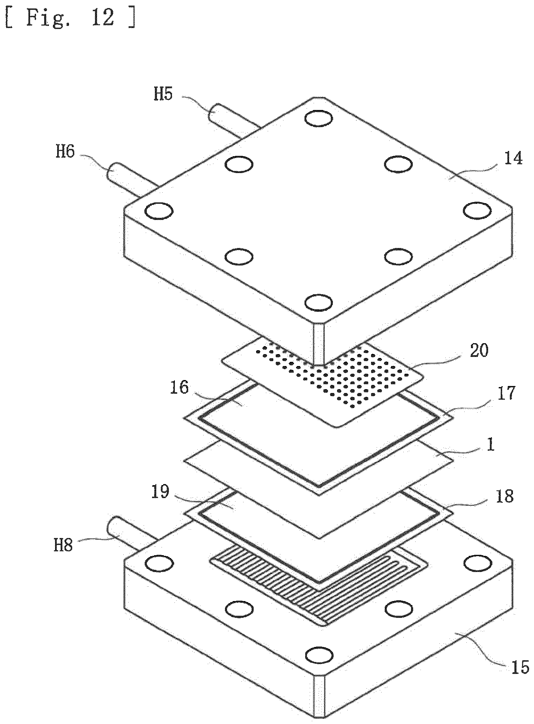

The fuel cell system according to the second embodiment is used for a system that includes the single cell that has a flat plate structure as in the first embodiment and includes the cell 1, a fuel electrode holder 14, an air electrode holder 15, sealing materials (17 and 18), a water vapor retention member 16, a current collector 19, and a shield 20 as illustrated in Fig. 10 to Fig. 17. The cell 1 is the same as that according to the first embodiment, and the water vapor retention member 16 and the current collector 19 are the same as the water vapor retention member 11 and the current collector 12 according to the first embodiment. Accordingly, a detailed description thereof is omitted.

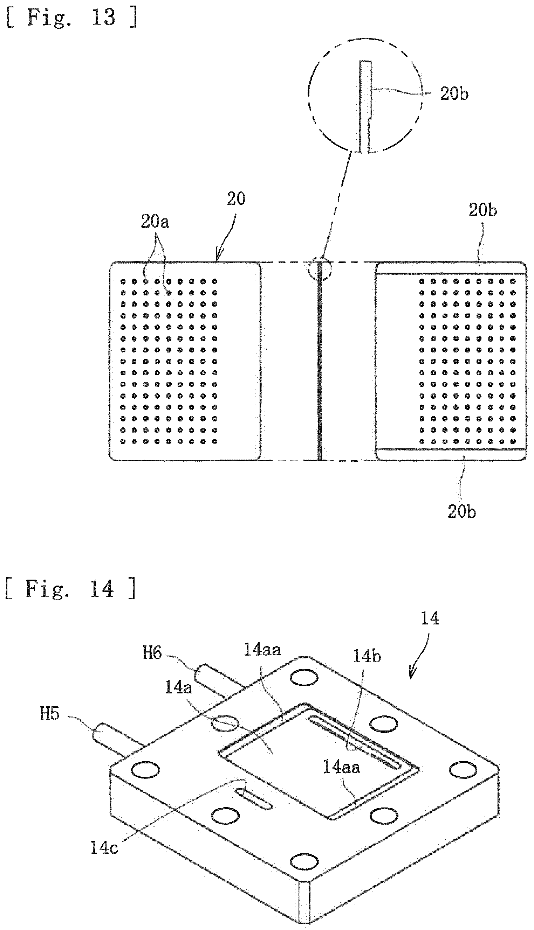

The fuel electrode holder 14 enables the fuel gas to pass and is composed of a rectangular metal plate that has a recessed shape 14a, a fuel inlet 14b, and a fuel outlet 14c, and pipes H5 and H6 for supplying and discharging the fuel gas as illustrated in Fig. 14. The recessed shape 14a is located at a predetermined portion (a substantially central position) of the fuel electrode holder 14 and is a recessed shape with a bottom that has a predetermined depth. Step portions 14aa are formed along peripheral portions of the recessed shape 14a, and the shield 20 can be mounted on the step portions 14aa.

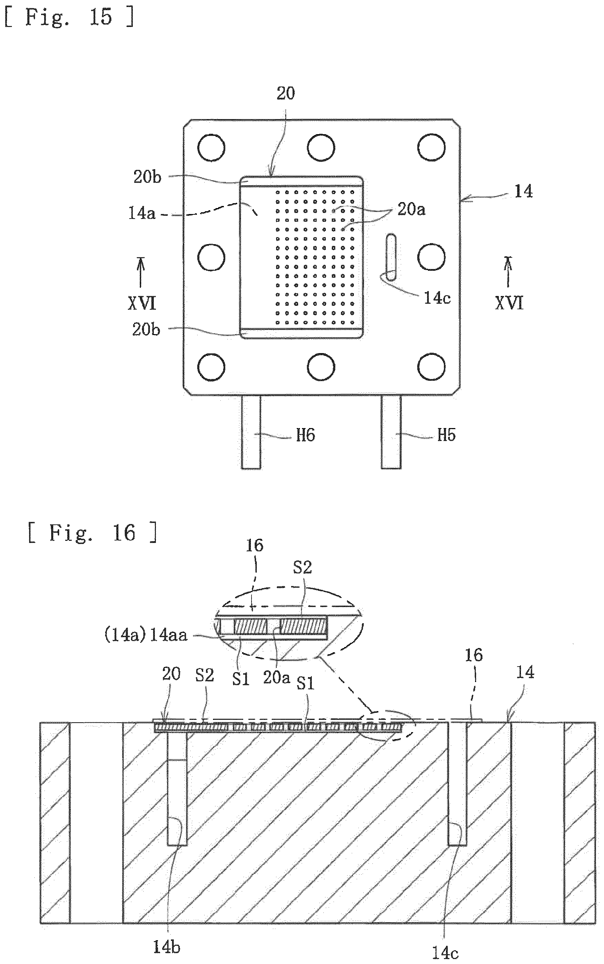

As illustrated in Fig. 15 and Fig. 16, the recessed shape 14a is covered by the shield 20, and the container space S1 is formed with the shield 20 mounted on the step portions 14aa. The fuel inlet 14b includes an opening portion for introducing the supplied fuel gas to the container space S1. The fuel outlet 14c includes an opening portion for discharging the fuel gas that is introduced into the container space S1. The fuel electrode holder 14 according to the present embodiment is electrically connected to the fuel electrode 1a of the cell 1.

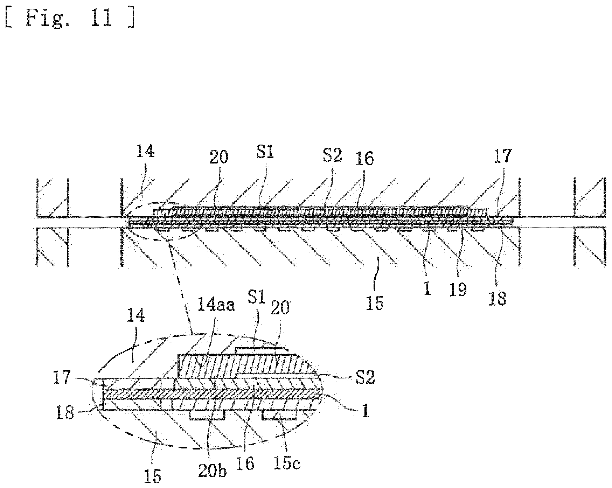

The shield 20 is composed of a conductive metal plate material that covers the recessed shape 14a of the fuel electrode holder 14 and includes exhaust ports 20a that include through-holes and step portions 20b that are formed along peripheral portions as illustrated in Fig. 13. As illustrated in Fig. 11 and Fig. 16, the container space S1 is formed between the shield 20 and the recessed shape 14a with the shield 20 mounted on the fuel electrode holder 14 as illustrated in Fig. 15, and the fuel gas in the container space S1 can be exhausted toward positions on a surface of the water vapor retention member 16 by using the exhaust ports 20a.

That is, the container space S1 is formed between the fuel electrode holder 14 and the shield 20, and the fuel gas to be supplied is containable in the container space S1 and is to be exhausted therefrom via the exhaust ports 20a. The fuel gas that is introduced from the fuel inlet 14b reaches the container space S1, is contained there, and is exhausted via the exhaust ports 20a while the pressure thereof is increased. Consequently, the fuel gas can be exhausted toward the surface (the front surface) of the water vapor retention member 16 in a wide region and at a constant flow rate.

The step portions 20b are formed along the peripheral portions of the shield 20, and the water vapor retention member 16 is stacked on the step portions 20b. As a result, as illustrated in Fig. 11 and Fig. 16, the supply space S2 is formed between the shield 20 and the water vapor retention member 16, and the fuel gas that is exhausted via the exhaust ports 20a is containable in the supply space S2. The container space S1 and the supply space S2 are thus formed on the front surface and the back surface of the shield 20 according to the present embodiment. The shield 20 may not include the step portions 20b. In this case, the supply space S2 is not formed. A method of forming the step portions 20b may be a cutting process, a bending process, or another process.

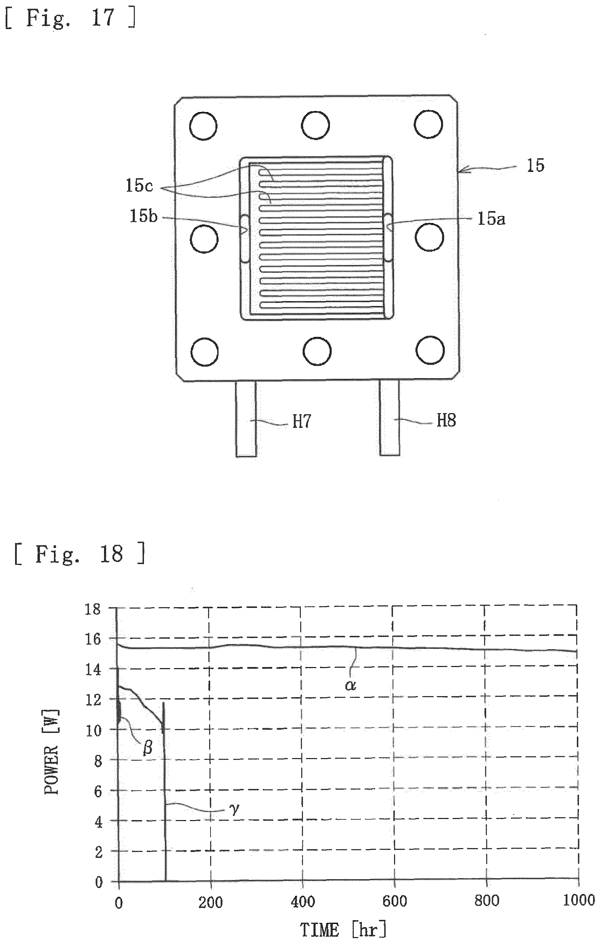

The air electrode holder 15 is composed of a conductive metal plate that is heat resistant, has air flow paths 15c through which the air passes on an inner side (inside the single cell), and pipes H7 and H8 for supplying and discharging the air as illustrated in Fig. 17. The air flow paths 15c have groove shapes (that may be a single groove shape) that are formed in the air electrode holder 15, and the paths through which the air can pass are formed with the air electrode holder 15 and the current collector 19 stacked. As for the air electrode holder 15 according to the present embodiment is electrically connected to the air electrode 1b of the cell 1.

An experiment that indicates technical superiority of the fuel cell system according to the present embodiment will now be described.

In an example α, the fuel gas was able to be exhausted toward positions on the surfaces of the water vapor retention members (11 and 16) with the shields (13 and 20) mounted. In comparative examples β and γ, there were no exhaust ports, and the amount of the supplied fuel differed therebetween. The cells 1 that were used were solid oxide fuel cells (SOFCs). The water vapor retention members (11 and 16) that were used were the same as those according to the embodiment described above. Operation temperature was about 750°C. The fuel was methane gas. No water was supplied from the outside. The amount of the supplied air was 1000 mL / min. The amount of the supplied fuel was 38 mL / min in the example α and the comparative example β and was 50 mL / min in the comparative example γ.

Under the conditions described above, power generation output (W) over time was measured during operations. As illustrated in Fig. 18, the result is as follows: In the comparative example β, the power generation was only about 14 W, damage occurred due to the occurrence of soot after 4.5 hours, and the power generation became zero. In the comparative example γ, damage occurred due to the occurrence of soot after 100 hours, and the power generation became zero. In the example α, however, soot scarcely occurred unlike the comparative examples β and γ, and the power generation continued for 1000 hours or more.

The fuel cell systems according to the first embodiment and the second embodiment described above include the exhaust ports (13a and 20a) via which the fuel gas is to be exhausted toward the positions on the surfaces of the water vapor retention members (11 and 16), can consequently uniformly supply the fuel gas to the water vapor retention members (11 and 16), and can inhibit soot from being generated. In particular, according to the first embodiment and the second embodiment described above, the fuel electrode separator 2 or the fuel electrode holder 14 that enables the fuel gas to pass and the shields (13 and 20) that are mounted on the fuel electrode separator 2 or the fuel electrode holder 14 are provided, and the exhaust ports (13a and 20a) include the through-holes that are formed in the shields (13 and 20). Accordingly, the exhaust ports (13a and 20a) can be accurately and readily formed at predetermined positions.

As for the fuel cell systems according to the first embodiment and the second embodiment, each container space S1 is formed between the fuel electrode separator 2 or the fuel electrode holder 14 and the shields (13 and 20), and the fuel gas to be supplied is containable in the container space S1 and is to be exhausted therefrom via the exhaust ports (13a and 20a). The container space S1 functions as a chamber, and the amount of the fuel gas that is exhausted via the exhaust ports (13a and 20a) can be substantially constant.

The fuel electrode separator 2 and the fuel electrode holder 14 according to the first embodiment and the second embodiment has the recessed shape (2a or 14a) at the predetermined portion and is mounted with the recessed shape (2a or 14a) covered by the shield (13 or 20), and consequently, the container space S1 is formed. Accordingly, the volume and the position of the container space S1 can be readily set depending on the form of each fuel cell system.

In addition, according to the first embodiment, the introduction flow paths 2d through which the fuel gas is introduced into the container space S1 and the discharge flow paths 2e through which the fuel gas is discharged from the container space S1 include the notches that are formed in the fuel electrode separator 2 (or may be used for the fuel electrode holder 14 according to the second embodiment). Accordingly, the flow rate of the fuel gas that is introduced into the container space S1 and the flow rate of the fuel gas that is discharged from the container space can be freely adjusted by setting the size, position, or number of the notch and forming the notch.

In addition, as for the fuel cell systems according to the first embodiment and the second embodiment, each supply space S2 is formed between the shields (13 and 20) and the water vapor retention members (11 and 16), and the fuel gas that is exhausted via the exhaust ports (13a and 20a) is containable in the supply space S2. Accordingly, the fuel gas can be uniformly supplied over the surfaces of the water vapor retention members (11 and 16). The volume of the supply space S2 can be adjusted by the heights of the step portions (13b and 20b) that are formed on the shields (13 and 20).

The present embodiments are described above. However, the present invention is not limited thereto. For example, the water vapor retention members (11 and 16) may not be the paper members. For example, the shields (13 and 20) may be mounted so as to face the air electrode 1b (that is, the air electrode separator 3 and the air electrode holder 15) of the cell 1 to form the container space S1. A porous block member and a foam metal or honeycomb member may also be acceptable. The fuel gas to be supplied can be town gas (methane gas, or LNG), propane gas, butane gas (for a portable stove), biofuel (such as fermentation methane), or gas composed of alcohols or ethers.

### Industrial Applicability

A fuel cell system that includes exhaust ports via which fuel gas is to be exhausted toward positions on a surface of a water vapor retention member can be used even for the case where an external shape differs or another function is added. Reference Signs List

- 1: cell
- 1a: fuel electrode
- 1b: air electrode
- 1c: electrolyte
- 2: fuel electrode separator
- 2a: recessed shape
- 2aa: step portion
- 2b: fuel inlet
- 2c: fuel outlet
- 2d: introduction flow path
- 2e: discharge flow path
- 3: air electrode separator
- 3a: air inlet
- 3b: air outlet
- 3c: air flow path
- 4: manifold
- 5: manifold
- 6 to 10: sealing material
- 11: water vapor retention member
- 12: current collector
- 13: shield
- 13a: exhaust port
- 13b: step portion
- 14: fuel electrode holder
- 14a: recessed shape
- 14aa: step portion
- 14b: fuel inlet
- 14c: fuel outlet
- 15: air electrode holder
- 16: water vapor retention member
- 17, 18: sealing material
- 19: current collector
- 20: shield
- 20a: exhaust port
- 20b: step portion
- S1: container space
- S2: supply space

## Claims

1. A fuel cell system comprising:
a cell that is capable of generating power and that includes a fuel electrode to which hydrogen acquired by reforming fuel gas is supplied, an air electrode to which oxygen in air is supplied, and an electrolyte that is interposed between the fuel electrode and the air electrode and that enables an oxygen ion generated from the oxygen in the air supplied to the air electrode to pass to the fuel electrode;
a water vapor retention member that is disposed on a communication path for the fuel gas supplied to the fuel electrode, that is capable of retaining water vapor generated by the fuel electrode along with power generation by using the cell and
mixing the water vapor with the fuel gas, that includes a reforming catalyst enabling the hydrogen to be generated by reacting the fuel gas, and that is capable of supplying the hydrogen generated due to a catalytic reaction by using the reforming catalyst to the fuel electrode; and
a plurality of exhaust ports via which the fuel gas is to be exhausted toward positions on a surface of the water vapor retention member.

2. The fuel cell system according to Claim 1, further comprising:
a fuel electrode separator or a fuel electrode holder that enables the fuel gas to pass; and
a shield that is mounted on the fuel electrode separator or the fuel electrode holder,
wherein the plurality of exhaust ports includes a plurality of through-holes that is formed in the shield.

3. The fuel cell system according to Claim 2, wherein a container space is formed between the fuel electrode separator or the fuel electrode holder and the shield, the fuel gas to be supplied being containable in the container space and being to be exhausted therefrom via the plurality of exhaust ports.

4. The fuel cell system according to Claim 3, wherein the fuel electrode separator or the fuel electrode holder has a recessed shape at a predetermined portion and is mounted with the recessed shape covered by the shield such that the container space is formed.

5. The fuel cell system according to Claim 4, wherein an introduction flow path through which the fuel gas is introduced into the container space and a discharge flow path through which the fuel gas is discharged from the container space include a notch that is formed in the fuel electrode separator or the fuel electrode holder.

6. The fuel cell system according to any one of Claim 2 to Claim 5, wherein a supply space is formed between the shield and the water vapor retention member, the fuel gas that is exhausted via the plurality of exhaust ports being containable in the supply space.
